# EUROPÄISCHE PATENTSCHRIFT

(11) **EP 3 672 920 B1**
(45) Veröffentlichungstag und Bekanntmachung des Hinweises auf die Patenterteilung: **06.03.2024**
(21) Anmeldenummer: 18773330.8
(22) Anmeldetag: 24.08.2018
(51) Int. Cl.: C04B 20/00

(54) **HERSTELLUNG VON BLÄHSAND MIT NIR**
PRODUCTION OF FOAMED SAND USING NEAR INFRARED
PRODUCTION DE SABLE EXPANSÉ PAR INFRAROUGE PROCHE

(30) Priorität: 24.08.2017 DE 102017119371
(43) Veröffentlichungstag der Anmeldung: 01.07.2020
(73) Patentinhaber: ThermProTEC GmbH, 77694 Kehl - Marlen (DE)
(72) Erfinder: GAUS, Rainer, 79279 Vörstetten (DE)
(74) Vertreter: Meissner Bolte Partnerschaft mbB
(86) Internationale Anmeldenummer: PCT/DE2018/100731
(87) Internationale Veröffentlichungsnummer: WO 2019/037819

(56) Entgegenhaltungen:
- WO-A1-83/00858
- WO-A1-2013/053635

## Beschreibung

Die Erfindung betrifft ein Verfahren zur Herstellung eines Schüttgutes im Wesentlichen aus aufgeschäumten bzw. aufgeblähten mineralischen oder oxidischen Teilchen durch thermische Behandlung einer Schüttung von Basis-Teilchen sowie eine Anordnung zur Durchführung dieses Verfahrens.

Im Rahmen der weltweiten Anstrengungen zum Klimaschutz besteht ein andauernd hoher und steigender Bedarf an kostengünstigen Dämmstoffen mit breitem Einsatzbereich. Im Hinblick darauf, dass gewisse in großem Maßstab eingesetzte Dämmstoffe (etwa auf Polystyrol-Basis) wegen Problemen beim Brandschutz und der umweltgerechten Entsorgung jedenfalls in gewissen Einsatzbereichen substituiert werden müssen, besteht insbesondere auch ein Bedarf an Substitut-Materialien, die im Bauwesen breite Anwendung finden können.

Es hat daher in den letzten Jahren Entwicklungen gegeben, aus bestimmten Sanden durch thermische Behandlung ein Schüttgut aus Teilchen mit Lufteinschlüssen und, hierdurch bedingt, sehr gutem thermischen Isolationsvermögen zu gewinnen, das mitunter als "Blähsand" bezeichnet wird. Diese Blähsande haben neben ihrer extrem geringen Wärmeleitfähigkeit eine hohe Temperaturbeständigkeit und geringe Wärmekapazität und lassen sich mit bekannten Bindemitteln zu verschiedenartigen Produkten verarbeiten, die in der Bauindustrie breite Anwendung finden können, etwa für Dämmputze, Dämmfüllstoffe für Bauelemente (etwa Ziegel), Brandschutzverkleidungen, schnelltrocknende Estriche etc.

Derartige Blähsande sind mittlerweile kommerziell verfügbar. Ihre Herstellung erfolgt mit "offener Flamme", was u.a. zu einer unbefriedigenden Ausbeute an brauchbarem Endprodukt und relativ hohen Kosten für die Separierung von unbrauchbaren Teilen des unmittelbaren Verfahrensproduktes führt.

Einschlägigen Stand der Technik bilden die WO83/00858 A1 und WO2013/053635 A1.

Der Erfindung liegt die Aufgabe zugrunde, ein verbessertes Verfahren zur Herstellung der o. a. Schüttgüter sowie eine zur Durchführung dieses Verfahrens geeignete Anordnung anzugeben.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 12 gelöst. Zweckmäßige Fortbildungen des Erfindungsgedankens sind Gegenstand der jeweiligen abhängigen Ansprüche.

Die Erfindung schließt den Gedanken ein, das Ausgangsprodukt, also eine Schüttung aus mineralischen oder oxidischen Basis-Teilchen, einer thermischen Behandlung mit kurzwelliger Infrarotstrahlung, speziell Strahlung im Bereich des nahen Infrarot (mit einer Wellenlänge von etwa 0,8 bis 1.5µm) auszusetzen, um das erwünschte Aufblähen bzw. Aufschäumen der Basis-Teilchen zu erreichen. Weiterhin schließt die Erfindung den Gedanken ein, die besagte kurzwellige Infrarotstrahlung (NIR-Strahlung) auf eine durch ein Strahlungsfeld transportierte Schicht oder einen Rieselstrom der Basis-Teilchen einwirken zu lassen, also eine kontinuierliche Verfahrensführung vorzusehen. Außerdem schließt die Erfindung den Gedanken ein, im Interesse einer hohen Effizienz des Aufblähens bzw. Aufschäumens und eines hohen Durchsatzes ein NIR-Strahlungsfeld mit hoher Leistungsdichte einzusetzen. Diese sollte typischerweise zumindest über 50 kW/m² liegen, vorzugsweise noch deutlich höher.

In dem beanspruchten Verfahren sind die Basis-Teilchen ein Sand mit hohem Wasserglasanteil, insbesondere mit einer Korngröße im Bereich von 50-500µm und einem Wasserglasanteil von mindestens 40%. Derartige Sande sind ein vielerorts verfügbares und sehr kostengünstiges Ausgangsprodukt, und ihre Verarbeitung ist unter Umwelt- und Arbeitsschutzaspekten unproblematisch.

Im Ergebnis des Verfahrens wird dann ein Schüttgut aus aufgeschäumten bzw. aufgeblähten Sand-Teilchen gewonnen, welches am Ende der thermischen Behandlung, ohne einen Trennschritt, einen Anteil von 60%, insbesondere von 80%, Perlit-Teilchen mit im Wesentlichen geschlossener Oberfläche umfasst und/oder bei dem die Teilchengröße im Bereich 0,3mm-2mm liegt. Ein solches Verfahrensprodukt ist besonders gut für den Einsatz in verschiedenen Produkten mit hoher Dämmwirkung geeignet und überdies besonders kostengünstig, weil das Ausgangsprodukt zu einem großen Anteil in ein brauchbares Endprodukt umgewandelt wird.

In einer bevorzugten Ausführung wird für den vorgeschlagenen Trockenprozess ein Infrarotstrahlerarray mit einer Strahlungstemperatur von 2900 K oder mehr, bevorzugt 3200 K oder mehr, eingesetzt. Dessen Strahlungsspektrum ist nach den Erkenntnissen der Erfinder für die thermische Entwässerung von Schüttgut, speziell mit pulvriger oder flitteriger Konsistenz, besonders geeignet.

Weiter bevorzugt ist der Einsatz einer Anordnung mit mehreren Halogenlampen mit entsprechender Strahlertemperatur, deren Strahlung durch zugeordnete Reflexionsflächen auf den hindurchgehenden Strom des zu behandelnden Ausgangsstoffes konzentriert bzw. fokussiert wird. In einer bevorzugten Ausführung sind auf der der Strahlungsquelle bzw. den Strahlungsquellen abgewandten Seite des Produktstromes weitere Reflektoren bzw. Reflexionsflächen vorgesehen, die einen beim ersten Durchgang nicht vom Produktström absorbierten Teil der NIR-Strahlung in den Produktström zurücklenken. Hierdurch wird die Strahlungsausbeute und damit die Energieeffizienz des Bearbeitungsprozesses weiter gesteigert.

Noch weiter bevorzugt ist eine derartige Ausführung der Anlage, dass der Bestrahlungsbereich einen weitgehend geschlossenen Strahlungsraum bildet, der nur insoweit geöffnet ist, als der Hindurchtransport des Produktstromes dies erfordern.

In Abhängigkeit von der konkreten chemischen Zusammensetzung sowie dem Feuchtegehalt des Schüttgutes wird für die Behandlung mit der NIR-Strahlung ein Zeitraum im Bereich zwischen 0,5 und 20 s, insbesondere zwischen 1 und 5 s, vorgesehen. Die Zeitdauer wird bei liegender oder schräger Förderung des Ausgangsmaterials durch das NIR-Strahlungsfeld durch dessen Länge und die Transportgeschwindigkeit der Fördereinrichtung eingestellt. Sofern die NIR-Bestrahlung im Rieselstrom erfolgt, kann die Verweildauer im Strahlungsfeld durch die Luftgeschwindigkeit eines dem Rieselstrom entgegen gerichteten Luftstroms geeignet eingestellt werden.

Im Kernbereich der thermischen Behandlung wird die Maximaltemperatur des Schüttgutes bevorzugt im Bereich zwischen 600 und 1500 °C, insbesondere 800 bis 1200°C, eingestellt.

Die Leistungsdichte der NIR-Strahlung wird bevorzugt auf Werte oberhalb von 300 kW/m², insbesondere auf mehr als 500 kW/m², eingestellt, um eine kurze Behandlungsdauer zu erzielen.

Dessen Schichtdicke des Ausgangsmaterials im Strahlungsfeld wird bevorzugt auf einen Wert zwischen 2 mm und 30 mm, noch spezieller zwischen 5 mm und 20 mm, eingestellt.

In einer weiteren Ausführung wird die Schüttung durch ein NIR-Strahlungsfeld mit mehreren Heizbereichen mit unterschiedlicher Leistungsdichte transportiert. Hierdurch lässt sich, falls in Anbetracht der Eigenschaften des Ausgangsproduktes und der gewünschten Eigenschaften des Endproduktes erforderlich, gezielt ein Vorwärmen und/oder ein Temperaturausgleich neben einem Haupt-Erhitzungsschritt realisieren. Dies ist auch in einer weiteren Ausführung möglich, in der neben dem Transport durch das Strahlungsfeld mit NIR-Strahlung mindestens ein weiterer thermischer Behandlungsschritt ausgeführt wird.

Die letztgenannte Ausführung kann speziell so ausgestaltet sein, dass die Schicht der Schüttung der Basis-Teilchen, insbesondere auf einem Rütteltisch oder Schrägförderer, liegend oder schräg durch das Strahlungsfeld mit naher Infrarotstrahlung transportiert und hierdurch thermisch vorbehandelt und die thermisch vorbehandelte Schüttung anschließend einer Nachbehandlung in einem Induktionsofen oder einem zweiten Strahlungsfeld mit Infrarotstrahlung unterzogen wird. Die Infrarotstrahlung des zweiten Strahlungsfeldes muss nicht notwendigerweise NIR-Strahlung sein, sondern es kann auch ein herkömmlicher Industrieofen mit langweiligerer IR-Strahlung bzw. Widerstandsheizung genutzt werden.

In einer weiteren Ausgestaltung wird der nachfolgende Behandlungsschritt in einem, insbesondere vertikalen, Mehrzonen-Ofen ausgeführt, dessen Heizzonen vom Eingang zum Ausgang hin ansteigende Temperatur haben. Noch spezieller kann hierbei die Temperatur der ersten Heizzone im Bereich zwischen 950 und 1050°C, die Temperatur in einer zweiten Heizzone im Bereich zwischen 1050°C und 1150°C und die Temperatur in einer dritten Heizzone im Bereich zwischen 1150°C und 1250°C eingestellt sein.

In einer weiteren Ausführung wird nach der thermischen Behandlung eine schnelle Abkühlung des Schüttgutes, insbesondere durch Auftreffen-Lassen auf eine aktiv gekühlte Kühlfläche, ausgeführt wird.

In einer praktisch relevanten Ausführung umfasst das Verfahren weiterhin einen Trennschritt des Separierens der aufgeschäumten bzw. aufgeblähten Teilchen von nicht aufgeschäumten bzw. nicht aufgeblähten Basis-Teilchen aufgrund ihres unterschiedlichen spezifischen Gewichts, insbesondere in einem Zyklonabscheider oder in einem aufsteigenden Luftstrom. Als besonders effizient erscheint es dabei, wenn der Trennschritt zusammen mit der thermischen Behandlung oder einem Schritt der thermischen Behandlung oder einem Abkühlschritt in ein und demselben Anlagenteil, insbesondere im aufsteigenden Luftstrom in einem Vertikalofen oder Kühler, ausgeführt wird.

Vorrichtungsaspekte der vorliegenden Erfindung ergeben sich für den Fachmann großenteils aus den oben erläuterten Verfahrensaspekten, so dass insoweit von Wiederholungen Abstand genommen wird. Es wird jedoch auf einige Ausgestaltungen der vorgeschlagenen Anordnung hingewiesen.

In einer Ausführung weist das NIR-Strahlungsfeld mehrere Heizbereiche mit separater Steuerung, insbesondere zur Einstellung unterschiedlicher Leistungsdichten, auf. Alternativ hierzu oder zusätzlich kann die Anordnung einen Mehrzonenofen mit einer induktiven oder Infrarot-Heizung aufweisen, der insbesondere in Transportrichtung der Schüttung stromabwärts des NIR-Strahlungsfeldes angeordnet und/oder insbesondere vertikal ausgerichtet ist.

In einer weiteren Ausführung weist die Transporteinrichtung einen Rütteltisch, Bandförderer oder Trommelförderer auf, wobei im Falle eines Trommelförderers die flächige Anordnung aus NIR-Halogenstrahlern in Anpassung an eine Umfangsfläche des Trommelförderers gekrümmt ist.

In einer weiteren Ausführung gehört zur Anordnung eine Kühleinrichtung zur schnellen Abkühlung des thermisch behandelten Schüttgutes, die insbesondere eine aktiv gekühlte Kühlfläche umfasst, auf die das Schüttgut auftrifft.

Eine weitere Ausführung hat eine Trenneinrichtung zum Separieren der aufgeschäumten bzw. aufgeblähten Teilchen von nicht aufgeschäumten bzw. nicht aufgeblähten Basis-Teilchen aufgrund ihres unterschiedlichen spezifischen Gewichts, insbesondere einen Zyklonabscheider oder ein Gebläse zum Erzeugen eines aufsteigenden Luftstroms.

Im Interesse eines zugleich kostengünstigen und kompakten Aufbaus der Anlage ist eine Ausgestaltung interessant, in der der vertikale Mehrzonenofen und das Gebläse zum Erzeugen eines aufsteigenden Luftstroms baulich derart vereinigt sind, dass der Trennschritt in Verbindung mit einem thermischen Behandlungsschritt im Mehrzonenofen oder einem Abkühlschritt ausgeführt wird.

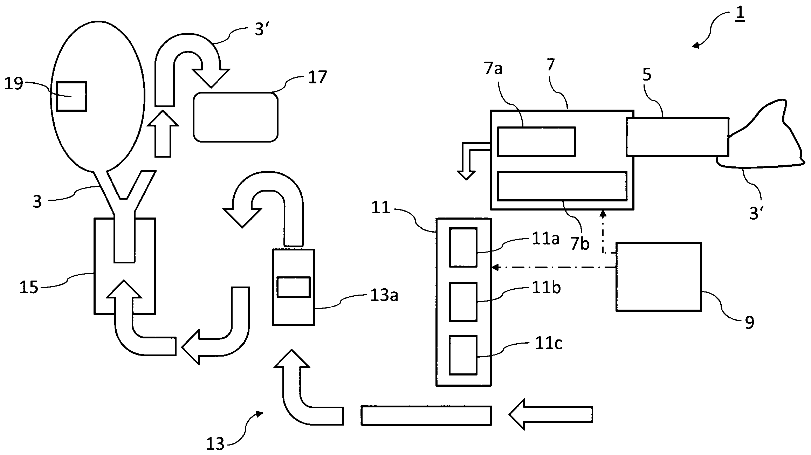

Vorteile und Zweckmäßigkeiten der Erfindung ergeben sich im Übrigen aus der nachfolgenden Beschreibung eines Ausführungsbeispiels anhand der Figur.

Die Figur zeigt in Art einer synoptischen Darstellung aus Blockschaltbild und Verfahrensablaufdiagramm eine Produktionsanlage 1 zur Herstellung von Blähsand als thermisch behandeltes Schüttgut 3 aus normalem, wasserglashaltigem Sand 3' als Ausgangsmaterial.

Ein Schneckenförderer 5 fördert den Sand 3' in eine NIR-Behandlungsstation 7, in der ein NIR-Strahlermodul 7a über einem Schwingförderer 7b angeordnet ist und eine NIR-Bestrahlung des kontinuierlich durch die Bestrahlungsstation 7 geförderten Ausgangsmaterials mit vorbestimmter Leistungsdichte und Verweildauer ausgeführt wird. Die Einstellung der Leistungsdichte sowie der Verweildauer (über die Fördergeschwindigkeit des Schwingförderers 7b) erfolgt mittels einer Prozesssteuereinheit 9. Nach Verlassen der NIR-Behandlungsstation 7 gelangt das vorbehandelte Material in einen Vertikalofen 11 mit induktiver Beheizung, der drei Heizzonen 11a, 11b, 11c mit unabhängig einstellbarer Temperatur umfasst und in dem die thermische Behandlung des Sandes abgeschlossen wird. Auch die Behandlung im Vertikalofen 11 und speziell die Temperaturen in den Heizzonen 11a-11c werden durch die Prozesssteuereinheit 9 gesteuert.

In einem Abkühlsystem 13, welches u.a. (nicht dargestellte) Kühlluftgebläse und ein Abkühlrohr 13a umfasst, wird der thermisch aufgeblähte bzw. aufgeschäumte Sand abgekühlt. Anschließend wird er einem Zyklonabscheider 15 zugeführt, wo eine Abtrennung der nicht aufgeblähten Produktfraktion 3' vom Endprodukt 3 mit den gewünschten Eigenschaften erfolgt. Während das thermisch nicht veränderte Ausgangsprodukt 3' in einen Lagerbehälter 17 gelangt, von dem aus es wieder zum Anfangspunkt des Prozesses gebracht werden kann, wird das gereinigte Endprodukt in einen Gewebesack 19 geblasen.

## Patentansprüche

1. Verfahren zur Herstellung eines Schüttgutes aus im Wesentlichen aufgeschäumten bzw. aufgeblähten mineralischen oder oxidischen Teilchen durch thermische Behandlung einer Schüttung von Basis-Teilchen,
**dadurch gekennzeichnet, dass**
die thermische Behandlung einen Transport einer schräg geförderten oder liegenden Schicht oder eines Rieselstromes der Schüttung durch ein Strahlungsfeld von NIR-Strahlung mit einer Wellenlänge von etwa 0,8 µm bis 1,5 µm umfasst, das eine Leistungsdichte von mindestens 50 kW/m² hat, wobei zur Erzeugung des NIR-Strahlungsfeldes Halogenlampen eingesetzt werden, deren Strahlung auf die Schicht oder den Rieselstrom des Schüttgutes fokussiert wird und wobei die Schicht oder der Rieselstrom für eine Zeitspanne im Bereich zwischen 0,5 und 20 s, insbesondere zwischen 5 und 15 s, dem NIR-Strahlungsfeld ausgesetzt wird,
wobei die Basis-Teilchen ein Sand mit einer Korngröße im Bereich von 50-500 µm und einem Wasserglasanteil von mindestens 40 Gew.-% sind und
wobei das Schüttgut aus aufgeschäumten bzw. aufgeblähten Sand-Teilchen am Ende der thermischen Behandlung, ohne einen Trennschritt, einen Anteil von mindestens 60 %, insbesondere von 80 % oder mehr, Perlit-Teilchen mit im Wesentlichen geschlossener Oberfläche umfasst und deren Teilchengröße im Bereich von 0,3 mm-2 mm liegt.

2. Verfahren nach Anspruch 1, wobei die Basis-Teilchen ein Sand mit einer Korngröße im Bereich von 100-300 µm und einem Wasserglasanteil von 50 Gew.-% oder mehr, sind.

3. Verfahren nach einem der vorangehenden Ansprüche, wobei die Schicht oder der Rieselstrom des Schüttgutes von einer Hauptfläche her aktiv bestrahlt und ein hindurchgehender Strahlungsanteil in die Schicht oder den Rieselstrom zurückreflektiert wird.

4. Verfahren nach einem der vorangehenden Ansprüche, wobei die Maximaltemperatur in der Schicht bzw. im Rieselstrom auf eine Temperatur im Bereich zwischen 600 und 1500 °C, insbesondere zwischen 600 und 1000 °C, eingestellt wird.

5. Verfahren nach einem der vorangehenden Ansprüche, wobei die Leistungsdichte des NIR-Strahlungsfeldes auf der Oberfläche der Schicht oder Rieselstromes oberhalb von 300 kW/m², insbesondere oberhalb von 500 kW/m², liegt.

6. Verfahren nach einem der vorangehenden Ansprüche, wobei die Schichtdicke der Schicht oder des Rieselstromes im Bereich zwischen 2mm und 30mm, insbesondere zwischen 5 mm und 20 mm, liegt.

7. Verfahren nach einem der vorangehenden Ansprüche, wobei die Schüttung durch ein NIR-Strahlungsfeld mit mehreren Heizbereichen mit unterschiedlicher Leistungsdichte transportiert wird und/oder neben dem Transport durch das Strahlungsfeld mit NIR-Strahlung mindestens ein weiterer thermischer Behandlungsschritt ausgeführt wird.

8. Verfahren nach Anspruch 7, wobei die Schicht der Schüttung der Basis-Teilchen, insbesondere auf einem Rütteltisch oder Schrägförderer, liegend oder schräg durch das Strahlungsfeld mit naher Infrarotstrahlung transportiert und hierdurch thermisch vorbehandelt und die thermisch vorbehandelte Schüttung anschließend einer Nachbehandlung in einem Induktionsofen oder einem zweiten Strahlungsfeld mit Infrarotstrahlung unterzogen wird.

9. Verfahren nach Anspruch 7 oder 8, wobei der nachfolgende Behandlungsschritt in einem, insbesondere vertikalen, Mehrzonen-Ofen ausgeführt wird, dessen Heizzonen vom Eingang zum Ausgang hin ansteigende Temperatur haben.

10. Verfahren nach einem der vorangehenden Ansprüche, wobei nach der thermischen Behandlung eine schnelle Abkühlung des Schüttgutes, insbesondere durch Auftreffen-Lassen auf eine aktiv gekühlte Kühlfläche, ausgeführt wird.

11. Verfahren nach einem der vorangehenden Ansprüche, welches einen Trennschritt des Separierens der aufgeschäumten bzw. aufgeblähten Teilchen von nicht aufgeschäumten bzw. nicht aufgeblähten Basis-Teilchen aufgrund ihres unterschiedlichen spezifischen Gewichts, insbesondere in einem Zyklonabscheider oder in einem aufsteigenden Luftstrom, umfasst, wobei der Trennschritt insbesondere zusammen mit der thermischen Behandlung oder einem Schritt der thermischen Behandlung oder einem Abkühlschritt in ein und demselben Anlagenteil, insbesondere im aufsteigenden Luftstrom in einem Vertikalofen oder Kühler, ausgeführt wird.

12. Anordnung zur Durchführung des Verfahrens nach einem der vorangehenden Ansprüche, welche eine flächige Anordnung aus NIR-Halogenstrahlern zur Erzeugung des NIR-Strahlungsfeldes mit einer Wellenlänge von etwa 0,8 µm bis 1,5 µm, und eine Fördereinrichtung zum Transportieren der Schicht oder des Rieselstromes der Schüttung von Basis-Teilchen durch das Strahlungsfeld aufweist, wobei die Fördereinrichtung einen Rütteltisch, Bandförderer oder Trommelförderer aufweist, wobei im Falle eines Trommelförderers die flächige Anordnung aus NIR-Halogenstrahlern in Anpassung an eine Umfangsfläche des Trommelförderers gekrümmt ist.

13. Anordnung nach Anspruch 12, wobei das NIR-Strahlungsfeld mehrere Heizbereiche mit separater Steuerung, insbesondere zur Einstellung unterschiedlicher Leistungsdichten, aufweist.

14. Anordnung nach Anspruch 12 oder 13, weiter aufweisend einen Mehrzonenofen mit einer induktiven oder Infrarot-Heizung, der insbesondere in Transportrichtung der Schüttung stromabwärts des NIR-Strahlungsfeldes angeordnet und/oder insbesondere vertikal ausgerichtet ist.

15. Anordnung nach einem der Ansprüche 12 bis 14, weiter aufweisend eine Kühleinrichtung zur schnellen Abkühlung des thermisch behandelten Schüttgutes, die insbesondere eine aktiv gekühlte Kühlfläche umfasst, auf die das Schüttgut auftrifft.

16. Anordnung nach einem der Ansprüche 12 bis 15, weiter aufweisend eine Trenneinrichtung zum Separieren der aufgeschäumten bzw. aufgeblähten Teilchen von nicht aufgeschäumten bzw. nicht aufgeblähten Basis-Teilchen aufgrund ihres unterschiedlichen spezifischen Gewichts, insbesondere einen Zyklonabscheider oder ein Gebläse zum Erzeugen eines aufsteigenden Luftstroms, wobei der vertikale Mehrzonenofen und das Gebläse zum Erzeugen eines aufsteigenden Luftstroms insbesondere baulich derart vereinigt sind, dass der Trennschritt in Verbindung mit einem thermischen Behandlungsschritt im Mehrzonenofen oder einem Abkühlschritt ausgeführt wird.

## Claims

1. Method for producing a bulk material essentially from foamed or blown mineral or oxidic particles by thermal treatment of a bed of basic particles, **characterized in that**
the thermal treatment comprises transporting an obliquely conveyed or horizontal layer or a trickle stream of the bed through a radiation field of NIR radiation with a wavelength from about 0.8 µm to about 1.5 µm and which has a power density of at least 50 kW/m2, wherein halogen lamps are used to generate the NIR radiation field, the radiation of which is focused on the layer or trickle stream of the bulk material and wherein the layer or trickle stream is exposed to the NIR radiation field for a period of time in the range between 0.5 and 20 s, in particular between 5 and 15 s,
wherein the basic particles are a sand with a grain size in the range of 50-500 µm and a water glass content of at least 40 weight % and
wherein the bulk material of foamed or blown sand particles at the end of the thermal treatment, without a separation step, comprises a proportion of at least 60%, in particular 80% or more, of perlite particles with a substantially closed surface and/or the particle size thereof is in the range of 0.3 mm-2 mm.

2. Method according to claim 1, wherein the basic particles are a sand with a high water glass content, in particular with a grain size in the range of 100-300 µm, and a water glass content of 50 weight % or more.

3. Method according to any of the preceding claims, wherein the layer or trickle stream of the bulk material is actively irradiated from a main surface and a portion of the radiation passing through is reflected back into the layer or trickle stream.

4. Method according to one of the preceding claims, wherein the maximum temperature in the layer or in the trickle stream is adjusted to a temperature in the range between 600 and 1500°C, in particular between 600 and 1000°C.

5. Method according to one of the preceding claims, wherein the power density of the NIR radiation field on the surface of the layer or trickle stream is above 300 kW/m2, in particular above 500 kW/m2.

6. Method according to one of the preceding claims, wherein the layer thickness of the layer or the trickle stream is in the range between 2 mm and 30 mm, in particular between 5 mm and 20 mm.

7. Method according to one of the preceding claims, wherein the bulk material is transported through an NIR radiation field with several heating areas with different power density and/or wherein, in addition to the transport through the radiation field with NIR radiation, at least one further thermal treatment step is carried out.

8. Method according to claim 7, wherein the layer of the bed of basic particles, in particular on a vibrating table or inclined conveyor, is transported horizontally or obliquely through the radiation field with near infrared radiation and is thereby thermally pretreated and the thermally pretreated bed is then subjected to an after-treatment in an induction furnace or a second radiation field with infrared radiation.

9. Method according to claim 7 or 8, wherein the subsequent treatment step is carried out in a, in particular vertical, multi-zone furnace, the heating zones of which have a temperature which rises from the inlet to the outlet.

10. Method according to one of the preceding claims, wherein after the thermal treatment a rapid cooling of the bulk material is carried out, in particular by letting it impinge on an actively cooled cooling surface.

11. Method according to one of the preceding claims, comprising a separation step of separating the foamed or blown particles from non-foamed or non-blown basic particles on the basis of their different specific weight, in particular in a cyclone separator or in a rising air stream, wherein the separation step is carried out in particular together with the thermal treatment or a thermal treatment step or a cooling step in one and the same plant part, in particular in the rising air flow in a vertical furnace or cooler.

12. Arrangement for carrying out the method according to one of the preceding claims, comprising a flat arrangement of NIR halogen radiators for generating the NIR radiation field and a conveying device for transporting the layer or trickle stream of the bed of basic particles through the radiation field with a wavelength from about 0.8 µm to about 1.5 µm, wherein the transport device comprises a vibrating table, belt conveyor or drum conveyor, wherein in the case of a drum conveyor the flat arrangement of NIR halogen emitters is curved to match a peripheral surface of the drum conveyor.

13. Arrangement according to claim 12, wherein the NIR radiation field comprises several heating areas with separate control, in particular for setting different power densities.

14. Arrangement according to claims 12 or 13, further comprising a multi-zone furnace with an inductive or infrared heating system, which is arranged in particular in the transport direction of the bed downstream of the NIR radiation field and/or is oriented in particular vertically.

15. Arrangement according to one of claims 12 to 14, further comprising a cooling device for rapid cooling of the thermally treated bulk material, which comprises in particular an actively cooled cooling surface on which the bulk material impinges.

16. Arrangement according to one of claims 12 to 15, further comprising a separating device for separating the foamed or blown particles from non-foamed or non-blown basic particles on the basis of their different specific weight, in particular a cyclone separator or a fan for generating a rising air stream, wherein the vertical multi-zone furnace and the fan for generating an ascending air flow are in particular structurally combined in such a way that the separation step is carried out in conjunction with a thermal treatment step in the multi-zone furnace or a cooling step.

## Revendications

1. Procédé de fabrication d'un produit en vrac à partir de particules minérales ou d'oxydes essentiellement expansées ou gonflées, par traitement thermique d'une masse de particules de base,
**caractérisé en ce que**
le traitement thermique comprend un transport d'une couche transportée ou couchée en biais ou d'un flux de ruissellement du produit en vrac à travers un champ de rayonnement NIR d'une longueur d'onde d'environ 0,8 pm à 1,5 pm, qui a une densité de puissance d'au moins 50 kW/m², dans lequel, pour générer le champ de rayonnement NIR, on utilise des lampes halogènes dont le rayonnement est focalisé sur la couche ou le flux de ruissellement du produit en vrac et dans lequel la couche ou le flux de ruissellement est exposé(e) au champ de rayonnement NIR pendant une durée comprise entre 0,5 et 20 s, en particulier entre 5 et 15 s,
dans laquelle les particules de base sont un sable ayant une taille de grain dans la plage de 50 à 500 µm et une teneur en verre soluble d'au moins 40 % en poids, et
dans lequel le produit en vrac de particules de sable expansé ou gonflé comprend, à la fin du traitement thermique, sans étape de séparation, une proportion d'au moins 60 %, en particulier de 80 % ou plus, de particules de perlite ayant une surface sensiblement fermée et dont la taille de particule se situe dans la plage de 0,3 mm-2 mm.

2. Procédé selon la revendication 1, dans lequel les particules de base sont un sable ayant une taille de grain dans la plage de 100 à 300 µm et une teneur en verre soluble de 50 % en poids ou plus.

3. Procédé selon l'une des revendications précédentes, dans lequel la couche ou le flux de ruissellement du produit en vrac est irradié activement à partir d'une surface principale et une partie du rayonnement qui le traverse est réfléchie dans la couche ou le flux de ruissellement.

4. Procédé selon l'une quelconque des revendications précédentes, dans lequel la température maximale dans la couche ou dans le flux de ruissellement est réglée à une température comprise entre 600 et 1500 °C, en particulier entre 600 et 1000 °C.

5. Procédé selon l'une des revendications précédentes, dans lequel la densité de puissance du rayonnement NIR sur la surface de la couche ou du flux de ruissellement est supérieure à 300 kW/m², en particulier supérieure à 500 kW/m².

6. Procédé selon l'une quelconque des revendications précédentes, dans lequel l'épaisseur de la couche ou du flux de ruissellement est comprise entre 2 mm et 30 mm, en particulier entre 5 mm et 20 mm.

7. Procédé selon l'une des revendications précédentes, dans lequel le produit en vrac est transporté à travers un champ de rayonnement NIR comportant plusieurs zones de chauffage avec des densités de puissance différentes et/ou, outre le transport à travers le champ de rayonnement avec un rayonnement NIR, au moins une autre étape de traitement thermique est exécutée.

8. Procédé selon la revendication 7, dans lequel la couche de la masse en vrac des particules de base, en particulier sur une table vibrante ou un convoyeur incliné, est transportée à l'horizontale ou en oblique à travers le champ de rayonnement avec un rayonnement infrarouge proche et est ainsi prétraitée thermiquement et la masse en vrac prétraitée thermiquement est ensuite soumise à un traitement ultérieur dans un four à induction ou un deuxième champ de rayonnement avec un rayonnement infrarouge.

9. Procédé selon la revendication 7 ou 8, dans lequel l'étape de traitement suivante est réalisée dans un four, notamment vertical, à plusieurs zones, dont les zones de chauffage sont à température croissante de l'entrée vers la sortie.

10. Procédé selon l'une quelconque des revendications précédentes, dans lequel, après le traitement thermique, on effectue un refroidissement rapide du produit en vrac, notamment en le faisant tomber sur une surface de refroidissement activement refroidie.

11. Procédé selon l'une quelconque des revendications précédentes, qui comprend une étape de séparation des particules expansées ou gonflées des particules de base non expansées ou non gonflées en raison de leur poids spécifique différent, en particulier dans un séparateur à cyclone ou dans un courant d'air ascendant, ladite étape de séparation étant réalisée en particulier conjointement avec le traitement thermique ou une étape de traitement thermique ou une étape de refroidissement dans une seule et même partie d'installation, en particulier dans le courant d'air ascendant dans un four vertical ou un refroidisseur.

12. Agencement pour la mise en oeuvre du procédé selon l'une des revendications précédentes, qui présente un agencement plat de radiateurs halogènes NIR pour la production du champ de rayonnement NIR avec une longueur d'onde d'environ 0,8 pm à 1,5 pm, et un dispositif de transport pour le transport de la couche ou du flux de ruissellement du déversement de particules de base à travers le champ de rayonnement, ledispositif de transport présente une table vibrante, un convoyeur à bande ou un convoyeur à tambour, dans le cas d'un convoyeur à tambour, l'agencement plat de faisceaux d'halogènes NIR est courbé pour s'adapter à une surface périphérique du convoyeur à tambour.

13. Agencement selon la revendication 12, dans lequel la source de rayonnement NIR présente plusieurs zones de chauffage avec une commande séparée, en particulier pour le réglage de différentes densités de puissance.

14. Agencement selon la revendication 12 ou 13, comprenant en outre un four à plusieurs zones avec un chauffage inductif ou à infrarouge, qui est disposé en particulier dans la direction de transport de la charge en vrac en aval du four de rayonnement NIR et/ou est orienté en particulier verticalement.

15. Agencement selon l'une des revendications 12 à 14, présentant en outre un dispositif de refroidissement pour le refroidissement rapide du produit en vrac traité thermiquement, qui comprend en particulier une surface de refroidissement à refroidissement actif sur laquelle le produit en vrac vient buter.

16. Agencement selon l'une quelconque des revendications 12 à 15, présentant en outre un dispositif de séparation pour séparer les particules expansées ou gonflées des particules de base non expansées ou non gonflées en raison de leur poids spécifique différent, notamment un
séparateur cyclone ou un ventilateur pour générer un flux d'air ascendant, le four vertical à plusieurs zones et le ventilateur pour générer un flux d'air ascendant étant notamment réunis par construction de telle sorte que l'étape de séparation est réalisée en liaison avec une étape de traitement thermique dans le four à plusieurs zones ou une étape de refroidissement.
